(19) Europäisches Patentamt
European Patent Office
Office européen des brevets

(11) **EP 2 768 783 B1**

(12) **FASCICULE DE BREVET EUROPEEN**

(45) Date de publication et mention
de la délivrance du brevet:
**11.12.2019 Bulletin 2019/50**

(21) Numéro de dépôt: **12787773.6**

(22) Date de dépôt: **17.10.2012**

(51) Int Cl.:
***C03C 17/36*** *(2006.01)*

(86) Numéro de dépôt international:
**PCT/FR2012/052362**

(87) Numéro de publication internationale:
**WO 2013/057424 (25.04.2013 Gazette 2013/17)**

(54) **VITRAGE ISOLANT A FORT COEFFICIENT DE TRANSMISSION LUMINEUSE**

ISOLIERVERGLASUNG MIT HOHEM LIGHTDURCHLÄSSIGKEITSKOEFFIZIENTEN

INSULATING GLAZING HAVING A HIGH LIGHT-TRANSMISSION COEFFICIENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **20.10.2011 FR 1159478**

(43) Date de publication de la demande:
**27.08.2014 Bulletin 2014/35**

(73) Titulaire: **Saint-Gobain Glass France
92400 Courbevoie (FR)**

(72) Inventeurs:
• **PALACIOS-LALOY, Agustin
38120 SAINT EGREVE (FR)**
• **SANDRE-CHARDONNAL, Etienne
44200 NANTES (FR)**

(74) Mandataire: **Saint-Gobain Recherche
Département Propriété Industrielle
39 Quai Lucien Lefranc
93300 Aubervilliers (FR)**

(56) Documents cités:
WO-A1-2012/050596    WO-A1-2012/095380
WO-A1-2012/096771    WO-A2-2005/105687
FR-A1- 2 949 774    US-A1- 2011 027 554

**Description**

L'invention concerne les vitrages dits de contrôle solaire, munis d'empilements de couches minces dont au moins l'une est fonctionnelle, c'est-à-dire qu'elle agit sur le rayonnement solaire. La présente invention concerne plus particulièrement les vitrages à couche(s) notamment ceux destinés principalement à l'isolation thermique des bâtiments.

On entend par couche "fonctionnelle" ou encore « active », au sens de la présente demande, la (ou les) couche(s) de l'empilement qui confère à l'empilement l'essentiel de ses propriétés thermiques. Le plus souvent les empilements en couches minces équipant le vitrage lui confèrent des propriétés sensiblement améliorées de contrôle solaire essentiellement par les propriétés intrinsèques de cette couche active. Ladite couche agit sur le flux de rayonnement solaire traversant ledit vitrage, par opposition aux autres couches, généralement en matériau diélectrique et ayant pour fonction une protection chimique ou mécanique de ladite couche fonctionnelle.

De tels vitrages munis d'empilements de couches minces agissent sur le rayonnement solaire incident soit essentiellement par l'absorption du rayonnement incident par la couche fonctionnelle, soit essentiellement par réflexion par cette même couche.

Ils sont regroupés sous la désignation de vitrage de contrôle solaire. Ils sont commercialisés et utilisés essentiellement :

- soit pour assurer essentiellement une protection du rayonnement solaire de l'habitation et en éviter une surchauffe, de tels vitrages étant qualifiés dans le métier d'antisolaire,
- soit essentiellement pour assurer une isolation thermique de l'habitation et éviter les déperditions de chaleur, ces vitrages étant qualifiés de vitrages isolants.

Par antisolaire, on entend ainsi au sens de la présente invention la faculté du vitrage de limiter le flux énergétique, en particulier le rayonnement Infrarouge solaire (IRS) le traversant depuis l'extérieur vers l'intérieur de l'habitation ou de l'habitacle.

Par isolant thermique, on entend un vitrage muni d'au moins une couche fonctionnelle lui conférant une déperdition énergétique, mesurée par le coefficient de transmission thermique U, inférieure à 5 W/m$^2$/K.

D'une manière générale, toutes les caractéristiques lumineuses et énergétiques présentées dans la présente description sont obtenues selon les principes et méthodes décrits dans les normes internationales ISO 9050 (2003) et ISO 10292 (1994) ou européennes EN 410 (1998) et EN 673 (1998) se rapportant à la détermination des caractéristiques lumineuses, solaires et énergétiques des vitrages utilisés dans le verre pour la construction.

Associés au substrat verrier, ces revêtements doivent également être esthétiquement plaisants, c'est-à-dire que le vitrage muni de son empilement doit présenter une colorimétrie, en transmission comme en réflexion extérieure, suffisamment neutre pour ne pas incommoder les utilisateurs ou alternativement une teinte légèrement bleue ou verte notamment dans le domaine du bâtiment. Par couleur neutre ou teinte bleue-verte, on entend au sens de la présente invention, dans le système de colorimétrie CIE LAB (L*, a*, b*), des valeurs absolues a* et b* inférieures ou égales à 10, voire inférieures ou égales à 5, lesdites valeurs a* et b* étant de préférence négatives.

Du coté intérieur du bâtiment (c'est à dire du coté du vitrage où la couche est présente), les valeurs possibles de la colorimétrie ne sont pas aussi restrictives que pour la face extérieure et des couleurs plus intenses et plus jaunes orangées peuvent être acceptées.

Par contre, quelque soit la face du vitrage, cette teinte doit être durable et uniforme sur toute la surface du vitrage, même si l'empilement de couche est soumis à des conditions d'usure prématurées telles qu'une abrasion résultant du nettoyage des vitres ou encore d'une exposition prolongée à l'humidité extérieure et aux lavages successifs. La résolution d'un tel problème d'une conservation durable de la même colorimétrie sur toute la surface du verre est particulièrement impérieuse lorsque l'empilement de couches est déposé sur un simple vitrage, notamment sur sa face 2, c'est-à-dire la face destinée à être tournée vers l'intérieur du bâtiment.

Dans l'idéal, ces vitrages munis d'empilements doivent également être capables de subir un traitement thermique du type trempe, sans perte de leurs propriétés optiques et/ou énergétiques. En particulier, les vitrages munis de couches selon l'invention doivent conserver après le traitement thermique, notamment en transmission ou en réflexion extérieure, la couleur sensiblement neutre ou encore la teinte bleue-verte précédemment décrite.

Ces revêtements sont de façon classique déposés par des techniques de dépôt du type pulvérisation sous vide assistée par champ magnétique d'une cathode du matériau ou d'un précurseur du matériau à déposer, souvent appelée technique de la pulvérisation magnétron dans le domaine. Une telle technique est aujourd'hui classiquement utilisée notamment lorsque le revêtement à déposer est constitué d'un empilement plus complexe de couches successives d'épaisseurs de quelques nanomètres ou quelques dizaines de nanomètres.

Les empilements les plus performants commercialisés à l'heure actuelle incorporent au moins une couche métallique du type Argent fonctionnant essentiellement sur le mode de la réflexion d'une majeure partie du rayonnement IR (infrarouge) incident. Ces empilements sont ainsi utilisés principalement en tant que vitrages du type bas émissifs (ou low-e en anglais) pour l'isolation thermique des bâtiments. Ces couches sont cependant très sensibles à l'humidité et sont donc exclusivement utilisées dans des doubles vitrages, en face 2 ou 3 de celui-ci pour être protégées de l'humidité. Il n'est ainsi pas possible de déposer de telles couches sur des vitrages simples (aussi appelés monolithiques). Les empilements selon l'invention ne comprennent pas de telles couches du type Argent, ou encore du type Or ou Platine ou alors en quantités très négligeables, notamment sous formes d'impuretés inévitables.

D'autres couches métalliques à fonction antisolaire ont également été reportées dans le domaine, comprenant des couches fonctionnelles du type Nb métallique ou nitruré, tel que décrit par exemple dans la demande WO01/21540 ou encore dans la demande WO2009/112759. Au sein de telles couches, le rayonnement solaire est cette fois majoritairement absorbé de manière non sélective par la couche fonctionnelle comprenant du niobium, le rayonnement IR (c'est-à-dire dont la longueur d'onde est compris entre environ 780 nm et 2500 nm) et le rayonnement visible (dont la longueur d'onde est compris entre environ et 380 et 780 nm) étant absorbés sans distinction par la couche active.

Dans les vitrages simples de contrôle solaire les moins coûteux, une unique couche fonctionnelle de niobium est déposée sur un seul substrat de verre. De façon généralement admise, les valeurs du coefficient U d'isolation thermique imposées par les normes en vigueur dans de nombreux pays ne peuvent cependant en principe être facilement obtenues dans de tels vitrages simples que si la couche fonctionnelle de niobium est relativement épaisse, par exemple de l'ordre d'au moins 10 nanomètres, voire plus. En raison de l'absorption non sélective de cette même couche vis-à-vis du rayonnement incident, les coefficients de transmission lumineuse de tels vitrages, au sens écrit dans la norme ISO 9050, sont en principe très faibles, généralement inférieurs à 30%, et le plus souvent inférieurs à 20%, comme il est visible dans les exemples reportés dans les demandes précédemment citées.

Au final, au vu de telles caractéristiques, il apparait très difficile d'obtenir à partir de tels empilements des vitrages de contrôle solaire combinant des coefficients de transfert thermique U acceptables, notamment inférieurs à 5 $W/m^2/K$, tout en conservant une transmission lumineuse suffisamment élevée, c'est à dire supérieure à 48% et de préférence supérieure à 50%, pour assurer le bon éclairement de l'habitation.

Comme indiqué précédemment, une autre contrainte s'impose également lors de l'élaboration des vitrages : lorsque celui-ci est constitué d'un unique substrat verrier, il doit le plus souvent subir un ou plusieurs traitements thermiques qui peut-être un bombage si on veut leur conférer un galbe (vitrine) mais qui est le plus souvent une trempe, notamment dans le secteur du bâtiment où l'on veut qu'il soit plus résistant et moins dangereux en cas de chocs. Le fait que des couches soient déposées sur le verre avant son traitement thermique entraîne fréquemment leur détérioration et une modification sensible de leurs propriétés, notamment optiques. A contrario, déposer les couches après le traitement thermique du verre s'avère complexe et coûteux. Comme décrit précédemment, il est donc impératif que de tels vitrages munis de telles couches puissent subir de tels traitements thermiques sans variation significative de leurs propriétés colorimétriques initiales.

Plus encore, quand l'empilement comprenant la couche fonctionnelle est déposée sur un vitrage simple, par exemple en face 2, c'est-à-dire sur la face intérieure du vitrage vis-à-vis du bâtiment ou de l'habitacle qu'il équipe, il doit présenter une résistance chimique et mécanique suffisante notamment à une exposition à l'atmosphère ambiante, en particulier telle que la colorimétrie du vitrage, notamment en transmission, reste de la même façon que précédemment sensiblement inchangée sur toute la surface du vitrage.

L'objet de la présente invention est de proposer un vitrage simple (aussi appelé monolithique) présentant tout à la fois des propriétés d'isolation thermiques suffisantes, avec notamment un facteur de transmission thermique U inférieur à 5 $W/m^2/K$, une forte transmission lumineuse, c'est-à-dire un facteur de transmission lumineuse $T_L$ supérieur à 48%, de préférence supérieur à 50%, et qui ne présente pas ou quasiment pas de variation colorimétrique lors de traitements thermiques, notamment du type trempe, ou encore lorsqu'il est soumis à des agressions chimique ou mécanique telle qu'une abrasion.

Selon l'invention, par une sélection appropriée des différents constituants de l'empilement de couches déposé sur le substrat verrier initial tel qu'exposé dans les revendications ci-après, un vitrage simple isolant thermique a ainsi pu être obtenu présentant notamment :

- une transmission lumineuse supérieure à 48% et de préférence supérieure à 50%,
- un coefficient de transfert thermique U inférieur à 5 $W/m^2/K$, équivalent à une émissivité normale $\varepsilon_n$ inférieure à 0,60 (60%), du vitrage simple muni de l'empilement de contrôle solaire, et de préférence une émissivité normale $\varepsilon_n$ inférieure à 0,58,
- une bonne durabilité notamment aux tests de vieillissement chimique/mécanique avec conservation de la colorimétrie initiale.

L'objet de l'invention consiste ainsi en premier lieu en un vitrage isolant transparent simple, constitué par une feuille de verre munie d'un revêtement constitué par un empilement de couches minces agissant sur le rayonnement solaire, de telle manière que le vitrage présente un coefficient de transmission lumineuse supérieure ou égale à 48% et de préférence supérieure à 50% et un coefficient de transmission thermique U inférieur ou égal à 5 $W/m^2/K$, ledit

vitrage étant caractérisé en ce que ledit revêtement comprend, à partir de la surface du substrat :

- une sous-couche constituée essentiellement d'un nitrure ou d'un oxynitrure d'aluminium et/ou de silicium, d'épaisseur physique comprise entre 30 et 60 nm,
  une couche fonctionnelle de Niobium Nb, d'épaisseur physique comprise entre 6 nm et 7 nm.
- une surcouche de protection de la couche fonctionnelle vis-à-vis de l'environnement extérieur, ladite surcouche étant constituée soit d'une unique couche constituée essentiellement d'un nitrure ou d'un oxynitrure d'aluminium et/ou de silicium soit d'un ensemble comprenant la superposition d'une couche essentiellement d'un nitrure ou d'un oxynitrure d'aluminium et/ou de silicium et d'une couche d'un oxyde choisi parmi l'oxyde de silicium et l'oxyde de titane, l'épaisseur optique totale de ladite surcouche étant comprise entre 80 et 110 nm.

Par épaisseur physique (ou géométrique) d'une couche, on entend au sens de la présente invention l'épaisseur réelle de la couche, telle qu'elle peut être mesurée notamment par les techniques classiques de microscopie électronique.

Par épaisseur optique, on entend classiquement au sens de la présente invention l'épaisseur physique précédente, multipliée par l'indice de réfraction n du matériau qui le constitue, mesuré à 550 nm.

Selon des modes de réalisations préférés de l'invention qui peuvent être le cas échéant combinés entre eux :

- Ledit revêtement comprend en outre au moins une couche d'un matériau choisi dans le groupe constitué par Ti, Mo, Al ou un alliage comprenant au moins l'un de ces éléments, de préférence Ti, disposée par rapport au substrat verrier au dessus de la couche fonctionnelle et directement au contact de celle-ci, ladite couche présentant une épaisseur physique comprise entre environ 0,2 nm et environ 2 nm.
- Ledit revêtement comprend en outre au moins une couche d'un matériau choisi dans le groupe constitué par Ti, Mo, Al ou un alliage comprenant au moins l'un de ces éléments, de préférence Ti, disposée par rapport au substrat verrier au dessous de la couche fonctionnelle et directement au contact de celle-ci, ladite couche présentant une épaisseur physique comprise entre environ 0,2 nm et environ 2 nm.
- La surcouche est constituée par la succession d'une couche constituée essentiellement de nitrure de silicium et d'une couche d'oxyde de silicium, l'épaisseur physique de la couche de nitrure de silicium étant comprise entre 40 et 50 nm et l'épaisseur physique de la couche d'oxyde de silicium étant comprise entre 3 et 10 nm.
- La surcouche est constituée par la succession d'une couche constituée essentiellement de nitrure de silicium et d'une couche d'oxyde de titane, l'épaisseur physique de la couche de nitrure de silicium étant comprise entre 30 et 45 nm et l'épaisseur physique de la couche d'oxyde de titane étant comprise entre 5 et 15 nm.
- La surcouche est constituée par une couche constituée essentiellement de nitrure de silicium, comprenant en outre éventuellement de l'aluminium.
- La sous-couche est constituée essentiellement de nitrure de silicium, comprenant en outre éventuellement de l'aluminium.
- L'épaisseur optique totale de ladite surcouche est comprise entre 90 et 105 nm, en particulier entre 90 et 100 nm.
- L'empilement de couches minces est disposé en face 2 du vitrage simple en numérotant les faces du substrat de l'extérieur vers l'intérieur du bâtiment ou de l'habitacle qu'il équipe.

Enfin, la présente invention se rapporte également à un panneau de parement de façade de type allège incorporant au moins un vitrage tel que précédemment décrit ou à une vitre latérale, une vitre arrière ou un toit pour automobile ou autre véhicule constitué par ou incorporant ledit vitrage.

Les revêtements selon l'invention permettent d'obtenir une valeur de la transmission lumineuse du substrat relativement élevée, tout en conservant un effet isolant notable, malgré l'épaisseur très faible de la couche fonctionnelle : les mesures effectuées montrent en effet un bon compromis entre le niveau de transmission lumineuse $T_L$ et le coefficient de transfert thermique U du substrat à couches.

Par les termes « au dessus » et « en dessous », il est fait référence dans la présente description à la position respective desdites couches par rapport au substrat verrier supportant l'empilement desdites couches.

Sans sortir du cadre de l'invention, il est possible selon l'invention de doper les couches précédentes en nitrure de silicium par des éléments du type Al, Zr, B, etc., de manière à modifier la couleur en transmission et/ou en réflexion du vitrage, selon les techniques bien connues de l'art.

Si l'application plus particulièrement visée par l'invention est le vitrage pour le bâtiment, il est clair que d'autres applications sont envisageables, notamment dans les vitrages de véhicules (mis à part le pare-brise où l'on exige une très haute transmission lumineuse), comme les verres latéraux, le toit-auto, la lunette arrière.

L'invention et ses avantages sont décrits avec plus de détails, ci-après, au moyen des exemples non limitatifs ci-dessous, selon l'invention et comparatifs. Dans tous les exemples et la description, les épaisseurs données sont physiques.

Tous les substrats sont en verre clair de 6 mm d'épaisseur de type Planilux commercialisé par la société Saint-Gobain Glass France.

Toutes les couches sont déposées de façon connue par pulvérisation cathodique assistée par champ magnétique (magnétron). Les couches en métal pur (Nb, Ti) sont déposées à partir de la pulvérisation de cibles en métal en atmosphère réduite et inerte (100% Argon). Les couches en nitrure de silicium (noté par la suite $Si_3N_4$ même si la couche déposée ne répond pas forcément à cette stœchiométrie supposée) sont déposées à partir d'une cible de silicium métallique (dopé avec 8% en masse d'aluminium) dans une atmosphère réactive contenant de l'azote (40% Ar et 60% $N_2$). Les couches en $Si_3N_4$ contiennent donc un peu d'aluminium. Les couches en oxyde de silicium (notées $SiO_2$ par la suite même si la couche déposée ne répond pas forcément à cette stœchiométrie supposée) sont déposées à partir de la cible métallique en silicium dans une atmosphère réactive contenant de l'oxygène, selon les techniques bien connues. Les couches en oxyde de titane (notées $TiO_2$ par la suite même si la couche déposée ne répond pas forcément à cette stœchiométrie supposée) sont déposées à partir d'une cible métallique en titane dans une atmosphère réactive contenant de l'oxygène, selon des techniques également bien connues.

On donne les indices de réfraction suivants, tels que donnés dans la littérature : $n_{Si3N4}$ de l'ordre de 2, $n_{TiO2}$ de l'ordre de 2,3 et $n_{SiO2}$ de l'ordre de 1,45.

## EXEMPLE 1 (selon WO 01/ 21540)

Cet exemple présente une couche fonctionnelle en Nb et des sous couche et surcouche en $Si_3N_4$ selon la séquence suivante :
Verre / $Si_3N_4$ (10 nm)/ Nb (35 nm) / $Si_3N_4$ (30 nm)

Après le dépôt des couches, le vitrage subit le traitement thermique suivant : chauffage à 620°C pendant 10 minutes puis trempe.

## EXEMPLE 2 (selon WO 2009/112759)

Cet exemple utilise une séquence de couches déposée sur le même substrat, une couche très fine de Titane métallique étant également déposée au dessus et en dessous de la couche fonctionnelle, selon l'enseignement de la publication WO 2009/112759. L'empilement comprend ainsi la succession de couches suivante :
Verre / $Si_3N_4$ (40 nm) /Ti ($\approx$1 nm)/ Nb (10 nm) /Ti ($\approx$1 nm)/$Si_3N_4$ (60 nm)

Le vitrage selon cet exemple n'est pas conforme à la présente invention au regard de l'épaisseur de la couche fonctionnelle et de l'épaisseur optique de la surcouche (120 nm).

Le substrat revêtu de l'empilement subit ensuite le même traitement thermique que décrit dans l'exemple 1.

## EXEMPLE 3 (comparatif)

Cet exemple utilise une séquence de couches déposée sur le même substrat, une couche très fine de Titane métallique étant également déposée au dessus et en dessous de la couche fonctionnelle, selon l'enseignement de la publication WO 2009/112759. L'empilement comprend ainsi la succession de couches suivante :
Verre / $Si_3N_4$ (40 nm) /Ti ($\approx$1 nm)/ Nb (environ 8-9 nm) /Ti ($\approx$1 nm)/$Si_3N_4$ (60 nm)

Le vitrage selon cet exemple n'est pas conforme à la présente invention au regard de l'épaisseur de la couche fonctionnelle et de l'épaisseur optique de la surcouche (120 nm).

Le substrat revêtu de l'empilement subit ensuite le même traitement thermique que décrit dans l'exemple 1.

## EXEMPLE 4 (selon l'invention)

Cet exemple utilise une séquence de couches conforme à l'invention, déposée sur le même substrat. L'empilement comprend ainsi la succession de couches suivante :
Verre / $Si_3N_4$ (45 nm) /Ti ($\approx$1 nm)/ Nb (6 nm) /Ti ($\approx$1 nm)/$Si_3N_4$ (38 nm)/$TiO_2$ (9nm)

L'épaisseur optique de la surcouche, constituée par les couches de nitrure de silicium et d'oxyde de titane est de l'ordre de 98 nm.

Le substrat revêtu de l'empilement subit ensuite le même traitement thermique que décrit dans les exemples précédents.

## EXEMPLE 5 (selon l'invention)

Cet exemple utilise la même séquence de couches qu'à l'exemple précédent, déposée sur le même substrat, à l'exception de la surcouche. L'empilement comprend ainsi la succession de couches suivante :
Verre / $Si_3N_4$ (45nm) /Ti ($\approx$1 nm)/ Nb (6 nm) /Ti ($\approx$1 nm)/$Si_3N_4$ (46 nm)/$SiO_2$ (5nm)

L'épaisseur optique de la surcouche, constituée par les couches de nitrure de silicium et d'oxyde de silicium est de l'ordre de 100 nm.

Le substrat revêtu de l'empilement subit ensuite le même traitement thermique que décrit dans les exemples précédents.

## EXEMPLE 6 (selon l'invention)

Cet exemple utilise la même séquence de couches qu'à l'exemple précédent, déposée sur le même, à l'exception de la surcouche. L'empilement comprend ainsi la succession de couches suivante :

Verre / $Si_3N_4$ (45 nm) /Ti ($\approx$1 nm)/ Nb (6 nm) /Ti ($\approx$1 nm)/$Si_3N_4$ (49 nm)

L'épaisseur optique de la surcouche, constituée par la couches de nitrure de silicium est de l'ordre de 100 nm.

Le substrat revêtu de l'empilement subit ensuite le même traitement thermique que décrit dans les exemples précédents.

## EXEMPLE 2b (comparatif)

Cet exemple utilise la même séquence de couches que l'exemple 2 précédent, déposée sur le même substrat, à l'exception de la sous-couche de nitrure de silicium, dont l'épaisseur est optimisée pour en augmenter la transmission lumineuse. L'empilement comprend ainsi la succession de couches suivante :

Verre / $Si_3N_4$ (60 nm) /Ti ($\approx$1 nm)/ Nb (10 nm) /Ti ($\approx$1 nm)/$Si_3N_4$ (60 nm)

L'épaisseur optique de la surcouche, constituée par la couche unique de nitrure de silicium est de l'ordre de 123 nm.

Le substrat revêtu de l'empilement subit ensuite le même traitement thermique que décrit dans les exemples précédents.

## EXEMPLE 3b (comparatif)

Cet exemple utilise la même séquence de couches que l'exemple 3 précédent, déposée sur le même substrat, à l'exception des épaisseurs des deux couches de nitrure de silicium, qui sont optimisées pour en augmenter la transmission lumineuse. L'empilement comprend ainsi la succession de couches suivante :

Verre / $Si_3N_4$ (60 nm) /Ti ($\approx$1 nm)/ Nb (8-9 nm) /Ti ($\approx$1 nm)/$Si_3N_4$ (60 nm)

L'épaisseur optique de la surcouche et de la sous-couche, constituées chacune par la couche unique de nitrure de silicium est de l'ordre de 120 nm.

Le substrat revêtu de l'empilement subit ensuite le même traitement thermique que décrit dans les exemples précédents.

Tableau 1

| EXEMPLE | Traitement thermique | Propriétés optiques et énergétiques | |
|---|---|---|---|
| | | $T_L$ | émissivité |
| Exemple 1 (WO 01/21540) | Avant | 11 | 14 |
| | Après | 18 | 18 |
| Exemple 2 (WO09/112759) | Avant | 42 | 32 |
| | Après | 40 | 37 |
| Exemple 3 (comp) | Avant | 48 | 39 |
| | Après | 47 | 45 |
| Exemple 4 (inv) | Avant | 53 | 50 |
| | Après | 51 | 56 |
| Exemple 5 (inv) | Avant | 52 | 50 |
| | Après | 50 | 56 |
| Exemple 6 (inv) | Avant | 52 | 50 |
| | Après | 51 | 56 |

(suite)

| EXEMPLE | Traitement thermique | Propriétés optiques et énergétiques | |
|---|---|---|---|
| | | $T_L$ | émissivité |
| Exemple 2b (comp.) | Avant | 47 | 32 |
| | Après | 46 | 37 |
| Exemple 3b (comp.) | Avant | 51 | 39 |
| | Après | 50 | 45 |

Les données reportées dans le tableau 1 montrent que les exemples 1, 2 et 3 selon l'art antérieur ne permettent pas d'obtenir les critères recherchés, à savoir une transmission lumineuse supérieure ou égale à 48% et de préférence supérieure ou égale à 50% et un coefficient U inférieur à 5 W/m$^2$/K (correspondant à une émissivité normale inférieure à 58%).

On peut voir que de tels objectifs peuvent néanmoins être atteints par l'homme du métier à partir de l'empilement de l'exemple 3b en optimisant l'épaisseur optique de la surcouche et la sous-couche, de telle façon à rehausser la transmission lumineuse. Les exemples 4, 5 et 6 selon l'invention permettent également d'obtenir directement de tels critères grâce à la très faible épaisseur de la couche fonctionnelle. Par contre un vitrage muni d'une couche de niobium d'épaisseur supérieure ou égale à 10 nm ne peut présenter une transmission lumineuse supérieure à 48% comme le montre l'exemple 2b, pour lequel les épaisseurs respectives des différentes couches ont pourtant été optimisées pour maximiser la transmission lumineuse du vitrage.

Les propriétés de résistance chimique des vitrages selon les exemples 6 (selon l'invention) et 3b (comparatif) ont été mesurées par un test HH dont les conditions expérimentales sont données ci-après :

Les vitrages sont placés dans une enceinte maintenue à pression atmosphérique, sous une température de 50°C dans une atmosphère comprenant 95% d'humidité relative.

Le test est pratiqué sur une portion du vitrage sur les deux échantillons selon le même protocole pendant une même durée de 14 jours, le reste du vitrage étant protégé de l'humidité. Le but est de caractériser les possibles variations de couleur en transmission, réflexion intérieure et extérieure qui dégraderait l'esthétique des vitrages par rapport à leur aspect originel, particulièrement si les agressions chimiques sont localisées et donnent lieu à des taches de couleur visiblement différente. La grandeur choisie pour caractériser ce changement est dans le système colorimétrique CIE (L*, a*, b*) la grandeur ΔE* classiquement définie par la relation :

$$\Delta E^* = \sqrt{(\Delta a^*)^2 + (\Delta b^*)^2 + (\Delta L^*)^2}$$

Le tableau 2 suivant donne pour chacun des deux échantillons les différences colorimétriques, en transmission et en réflexion intérieure et extérieure, entre la zone du vitrage n'ayant pas subi le traitement chimique et la zone du vitrage traitée.

Tableau 2

| Zone du vitrage | Exemple 6 | | Exemple 3b | |
|---|---|---|---|---|
| | test HH | hors test | test HH | hors test |
| L*$_T$ | 76 | 78 | 80 | 80 |
| a*$_T$ | -1,2 | -2,1 | -4,1 | -4,2 |
| b*$_T$ | -4,9 | -3,3 | 3,5 | 7,4 |
| ΔE$_T$ | 3 | | 4 | |
| L*$_{Rext}$ | 46 | 48 | 44 | 46 |
| a*$_{RLext}$ | -1,4 | -1,6 | 2,5 | 1,7 |
| b*$_{RLext}$ | 0,1 | 1,3 | -10,3 | -8,2 |
| ΔE$_{RLext}$ | 2 | | 3 | |
| L*$_{RInt}$ | 40 | 33 | 24 | 19 |

(suite)

| Zone du vitrage | Exemple 6 | | Exemple 3b | |
|---|---|---|---|---|
| | test HH | hors test | test HH | hors test |
| $a^*_{RLint}$ | 1,5 | 7,3 | 22,3 | 30 |
| $b^*_{RLint}$ | 29 | 28,8 | -3,5 | -32 |
| $\Delta E_{RLint}$ | 9 | | 30 | |

On remarque que les grandeurs mesurées $\Delta E_T$ et $\Delta E_{RLext}$ entre une zone soumise au test HH et une zone n'ayant pas été traitée est faible pour les deux vitrages selon les exemples 6 et 3b, ce qui indique une colorimétrie sensiblement constante des vitrages soumis aux agressions climatiques, lorsqu'ils sont observés de l'extérieur.

Au contraire, l'examen de la colorimétrie entre une zone soumise au test HH et une zone n'ayant pas été traitée sur la face intérieur du vitrage (c'est à dire celle tournée vers l'intérieur du bâtiment), telle que mesurée par la grandeur $\Delta E_{RLint}$, montre des variations de colorimétrie très importantes du vitrage selon l'exemple 3b comparatif. Au contraire, le vitrage de l'exemple 6 selon l'invention se caractérise par une variation de colorimétrie beaucoup plus faible.

Au final, seul le vitrage revêtu d'un empilement selon l'invention peut donc subir le test de vieillissement accéléré, sans que ses propriétés colorimétriques en soient sensiblement modifiées, ainsi que les propriétés optiques et énergétiques recherchés.

Les mêmes tests HH ont également été effectués sur les vitrages selon l'exemple 5 selon l'invention. Les résultats obtenus sont donnés dans le tableau 3 suivant :

Tableau 3

| Zone du vitrage | Exemple 5 | |
|---|---|---|
| | test HH | hors test |
| $L^*_T$ | 75,9 | 75,8 |
| $a^*_T$ | -2,2 | -2,2 |
| $b^*_T$ | -5,2 | -5,1 |
| $\Delta E_T$ | 0,1 | |
| $L^*_{Rext}$ | 49,5 | 49,6 |
| $a^*_{RLext}$ | -1,3 | -1,3 |
| $b^*_{RLext}$ | 1,7 | 1,7 |
| $\Delta E_{RLext}$ | 0,1 | |
| $L^*_{RInt}$ | 39,5 | 39,8 |
| $a^*_{RLint}$ | 3,5 | 3,3 |
| $b^*_{RLint}$ | 30,2 | 30,3 |
| $\Delta E_{RLint}$ | 0,4 | |

Là encore, on peut voir qu'entre une zone soumise au test HH et une zone n'ayant pas été traitée, les vitrages de l'exemple 5 selon l'invention se caractérise par une très faible variation de colorimétrie, telle que mesurée par la grandeur $\Delta E_{RLint}$.

En conclusion, les vitrages de protection solaire selon l'invention apparaissent très avantageux et peu couteux en particulier pour équiper des bâtiments, sans exclure pour autant des applications dans l'automobile et tous véhicules : les vitres latérales, arrière, le toit-auto, qui peuvent d'ailleurs présenter des revêtements émaillés.

Les empilements de couches selon l'invention permettent l'obtention de vitrages de contrôle solaire présentant les valeurs de $T_L$ et d'isolation thermique recherchées et dont la colorimétrie reste sensiblement constante, sous l'effet des différentes traitements et attaques chimique auxquels ils peuvent être soumis lors de leur fabrication et de leur utilisation.

Par application de la présente invention, on peut ainsi fabriquer des vitrages de contrôle solaire permettant une vision améliorée et qui présentent en outre une très bonne durabilité chimique, sans variation significative de leur colorimétrie dans le temps.

Sans sortir du cadre de l'invention, on peut aussi faire des allèges à couches émaillées, plutôt que laquées, ce qui est industriellement très intéressant, l'émaillage se faisant pendant le procédé de trempe, alors que le laquage nécessite une étape supplémentaire de fabrication.

## Revendications

1. Vitrage transparent simple, constitué par une feuille de verre munie d'un revêtement constitué par un empilement de couches minces agissant sur le rayonnement solaire, de telle manière que le vitrage présente un coefficient de transmission lumineuse supérieur ou égal à 48% et un coefficient de transmission thermique U inférieur ou égal à 5 W/m$^2$/K, ledit vitrage étant *caractérisé en ce que* ledit revêtement comprend, à partir de la surface du substrat :

   - une sous-couche constituée essentiellement d'un nitrure ou d'un oxynitrure d'aluminium et/ou de silicium, d'épaisseur physique comprise entre 30 et 60 nm,
   - une couche fonctionnelle de Niobium Nb dont l'épaisseur physique est comprise entre 6 nm et 7 nm,
   - une surcouche de protection de la couche fonctionnelle vis-à-vis de l'environnement extérieur, ladite surcouche étant constituée soit d'une unique couche constituée essentiellement d'un nitrure ou d'un oxynitrure d'aluminium et/ou de silicium soit d'un ensemble comprenant la superposition d'une couche essentiellement d'un nitrure ou d'un oxynitrure d'aluminium et/ou de silicium et d'une couche d'un oxyde choisi parmi l'oxyde de silicium et l'oxyde de titane, l'épaisseur optique totale de ladite surcouche étant comprise entre 80 et 110 nm.

2. Vitrage selon la revendication 1, dans lequel ledit revêtement comprend en outre au moins une couche d'un matériau choisi dans le groupe constitué par Ti, Mo, Al ou un alliage comprenant au moins l'un de ces éléments, disposée par rapport au substrat verrier au dessus de la couche fonctionnelle et au contact de celle-ci, ladite couche présentant une épaisseur physique comprise entre environ 0,2 nm et environ 2 nm.

3. Vitrage selon l'une des revendication 1 ou 2, dans lequel ledit revêtement comprend en outre au moins une couche d'un matériau choisi dans le groupe constitué par Ti, Mo, Al ou un alliage comprenant au moins l'un de ces éléments, disposée par rapport au substrat verrier au-dessus et en dessous de la couche fonctionnelle et au contact de celle-ci, ladite couche présentant une épaisseur physique comprise entre environ 0,2 nm et environ 2 nm.

4. Vitrage selon l'une des revendications 2 ou 3, dans lequel ledit matériau est le Ti.

5. Vitrage selon l'une des revendications précédentes, dans lequel la surcouche est constituée par la succession d'une couche constituée essentiellement de nitrure de silicium et d'une couche d'oxyde de silicium, l'épaisseur physique de la couche de nitrure de silicium étant comprise entre 40 et 50 nm et l'épaisseur physique de la couche d'oxyde de silicium étant comprise entre 3 et 10 nm.

6. Vitrage selon l'une des revendications 1 à 4, dans lequel la surcouche est constituée par la succession d'une couche constituée essentiellement de nitrure de silicium et d'une couche d'oxyde de titane, l'épaisseur physique de la couche de nitrure de silicium étant comprise entre 30 et 45 nm et l'épaisseur physique de la couche d'oxyde de titane étant comprise entre 5 et 15 nm.

7. Vitrage selon l'une des revendications 1 à 4, dans lequel la surcouche est constituée par ou comprend une couche constituée essentiellement de nitrure de silicium, comprenant en outre éventuellement de l'aluminium.

8. Vitrage selon l'une des revendications précédentes, dans lequel la sous-couche est constituée essentiellement de nitrure de silicium, comprenant en outre éventuellement de l'aluminium.

9. Vitrage selon l'une des revendications précédentes, dans lequel l'épaisseur optique totale de ladite surcouche est comprise entre 90 et 105 nm, en particulier entre 90 et 100 nm.

10. Vitrage simple incorporant le substrat selon l'une des revendications précédentes, l'empilement de couches minces étant disposé en face 2 du vitrage simple en numérotant les faces du substrat de l'extérieur vers l'intérieur du bâtiment ou de l'habitacle qu'il équipe.

11. Panneau de parement de façade de type allège incorporant au moins un vitrage selon l'une des revendications 1 à 10.

**Patentansprüche**

1. Transparente Einfachverglasung, bestehend aus einer Glasscheibe, die mit einer Beschichtung versehen ist, die aus einem Stapel dünner Schichten besteht, die auf die Sonnenstrahlung einwirken, so dass die Verglasung einen Lichtdurchlässigkeitskoeffizienten von mehr als oder gleich 48 % und einen Wärmedurchgangskoeffizienten U von weniger als oder gleich 5 W/m²/K aufweist, wobei die Verglasung *dadurch gekennzeichnet ist, dass* die Beschichtung ausgehend von der Oberfläche des Substrats umfasst:

   - eine Unterschicht, die im Wesentlichen aus einem Aluminium- und/oder Siliciumnitrid oder -oxynitrid mit einer physikalischen Dicke zwischen 30 und 60 nm besteht,
   - eine Funktionsschicht aus Niob Nb, deren physikalische Dicke zwischen 6 nm und 7 nm liegt,
   - eine Deckschicht zum Schutz der Funktionsschicht gegenüber der äußeren Umgebung, wobei die Deckschicht entweder aus einer einzigen Schicht besteht, die im Wesentlichen aus einem Aluminium- und/oder Siliciumnitrid oder -oxynitrid besteht, oder aus einer Anordnung, umfassend die Überlagerung einer Schicht im Wesentlichen eines Aluminium- und/oder Siliciumnitrids oder -oxynitrids und einer Schicht eines Oxids, das unter Siliciumoxid und Titanoxid ausgewählt ist, wobei die optische Gesamtdicke der Deckschicht zwischen 80 und 110 nm liegt.

2. Verglasung nach Anspruch 1, wobei die Beschichtung ferner mindestens eine Schicht eines Materials umfasst, das aus der Gruppe ausgewählt ist, die aus Ti, Mo, Al oder einer Legierung mit mindestens einem dieser Elemente besteht, die in Bezug auf das Glassubstrat über der Funktionsschicht und in Kontakt mit dieser angeordnet ist, wobei die Schicht eine physikalische Dicke zwischen zirka 0,2 nm und zirka 2 nm aufweist.

3. Verglasung nach einem der Ansprüche 1 oder 2, wobei die Beschichtung ferner mindestens eine Schicht eines Materials umfasst, das aus der Gruppe ausgewählt ist, die aus Ti, Mo, Al oder einer Legierung mit mindestens einem dieser Elemente besteht, die in Bezug auf das Glassubstrat über und unter der Funktionsschicht und in Kontakt mit dieser angeordnet ist, wobei die Schicht eine physikalische Dicke zwischen zirka 0,2 nm und zirka 2 nm aufweist.

4. Verglasung nach einem der Ansprüche 2 oder 3, wobei das Material Ti ist.

5. Verglasung nach einem der vorhergehenden Ansprüche, wobei die Deckschicht aus einer Abfolge aus einer Schicht, die im Wesentlichen aus Siliciumnitrid besteht, und einer Siliciumoxidschicht besteht, wobei die physikalische Dicke der Siliciumnitridschicht zwischen 40 und 50 nm liegt und die physikalische Dicke der Siliciumoxidschicht zwischen 3 und 10 nm liegt.

6. Verglasung nach einem der Ansprüche 1 bis 4, wobei die Deckschicht aus einer Abfolge aus einer Schicht, die im Wesentlichen aus Siliciumnitrid besteht, und einer Titanoxidschicht besteht, wobei die physikalische Dicke der Siliciumnitridschicht zwischen 30 und 45 nm liegt und die physikalische Dicke der Titanoxidschicht zwischen 5 und 15 nm liegt.

7. Verglasung nach einem der Ansprüche 1 bis 4, wobei die Deckschicht aus einer Schicht besteht oder eine Schicht umfasst, die im Wesentlichen aus Siliciumnitrid besteht, umfassend ferner gegebenenfalls Aluminium.

8. Verglasung nach einem der vorhergehenden Ansprüche, wobei die Unterschicht im Wesentlichen aus Siliciumnitrid besteht, umfassend ferner gegebenenfalls Aluminium.

9. Verglasung nach einem der vorhergehenden Ansprüche, wobei die optische Gesamtdicke der Deckschicht zwischen 90 und 105 nm, insbesondere zwischen 90 und 100 nm, liegt.

10. Einfachverglasung mit dem Substrat nach einem der vorhergehenden Ansprüche, wobei der Stapel dünner Schichten auf Seite 2 der Einfachverglasung angeordnet ist, wobei die Seiten des Substrats von außerhalb nach innerhalb des Gebäudes oder des Fahrgastraums, das/den sie ausstattet, nummeriert sind.

11. Fassadenverkleidungsplatte vom Brüstungstyp mit mindestens einer Verglasung nach einem der Ansprüche 1 bis 10.

**Claims**

1. Single transparent glazing, consisting of a sheet of glass equipped with a coating consisting of a stack of thin layers that act on solar radiation, in such a way that the glazing has a light transmission coefficient of greater than or equal to 48% and a heat transmission coefficient U of less than or equal to 5 $W/m^2/K$, said glazing being *characterized in that* said coating comprises, from the surface of the substrate:

   - an underlayer consisting essentially of a nitride or of an oxynitride of aluminium and/or of silicon, having a physical thickness between 30 and 60 nm,
   - a functional layer of niobium Nb, the physical thickness of which is between 6 nm and 7 nm,
   - an overlayer for protecting the functional layer with respect to the outside environment, said overlayer consisting either of a single layer consisting essentially of a nitride or of an oxynitride of aluminium and/or of silicon or of an assembly comprising the superposition of a layer essentially of a nitride or of an oxynitride of aluminium and/or of silicon and of a layer of an oxide chosen from silicon oxide and titanium oxide, the total optical thickness of said overlayer being between 80 and 110 nm.

2. Glazing according to Claim 1, in which said coating additionally comprises at least one layer of a material chosen from the group consisting of Ti, Mo, Al or an alloy comprising at least one of these elements, positioned with respect to the glass substrate on top of the functional layer and in contact therewith, said layer having a physical thickness between around 0.2 nm and around 2 nm.

3. Glazing according to either of Claims 1 and 2, in which said coating additionally comprises at least one layer of a material chosen from the group consisting of Ti, Mo, Al or an alloy comprising at least one of these elements, positioned with respect to the glass substrate on top of and underneath the functional layer and in contact therewith, said layer having a physical thickness between around 0.2 nm and around 2 nm.

4. Glazing according to either of Claims 2 and 3, in which said material is Ti.

5. Glazing according to one of the preceding claims, in which the overlayer consists of the succession of a layer consisting essentially of silicon nitride and of a layer of silicon oxide, the physical thickness of the silicon nitride layer being between 40 and 50 nm and the physical thickness of the silicon oxide layer being between 3 and 10 nm.

6. Glazing according to one of Claims 1 to 4, in which the overlayer consists of the succession of a layer consisting essentially of silicon nitride and of a layer of titanium oxide, the physical thickness of the silicon nitride layer being between 30 and 45 nm and the physical thickness of the titanium oxide layer being between 5 and 15 nm.

7. Glazing according to one of Claims 1 to 4, in which the overlayer consists of or comprises a layer consisting essentially of silicon nitride, additionally optionally comprising aluminium.

8. Glazing according to one of the preceding claims, in which the underlayer essentially consists of silicon nitride, additionally optionally comprising aluminium.

9. Glazing according to one of the preceding claims, in which the total optical thickness of said overlayer is between 90 and 105 nm, in particular between 90 and 100 nm.

10. Single glazing incorporating the substrate according to one of the preceding claims, the stack of thin layers being positioned on face 2 of the single glazing by numbering the faces of the substrate from the outside to the inside of the building or the passenger compartment that it equips.

11. Facade facing panel of spandrel glass type incorporating at least one glazing according to one of Claims 1 to 10.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0121540 A
- WO 2009112759 A
- WO 09112759 A